# EUROPEAN PATENT SPECIFICATION

(11) **EP 3 724 285 B1**
(45) Date of publication and mention of the grant of the patent: **18.03.2026**
(21) Application number: 18836502.7
(22) Date of filing: 10.12.2018
(51) Int. Cl.: C09J 7/10, C09J 183/04

(54) **SILOXANE-BASED DUAL-CURE TRANSPARENT TRANSFER FILM**
ZWEIFACH HÄRTENDER TRANSPARENTER ÜBERTRAGUNGSFILM AUF SILOXANBASIS
FILM DE TRANSFERT TRANSPARENT À DOUBLE DURCISSEMENT À BASE DE SILOXANE

(30) Priority: 14.12.2017 US 201762598544 P
(43) Date of publication of application: 21.10.2020
(73) Proprietor: 3M Innovative Properties Company, Saint Paul, Minnesota 55133-3427 (US)
(72) Inventor: SCHWARTZ, Evan L., Saint Paul, Minnesota 55133-3427 (US); HARTMANN-THOMPSON, Claire, Saint Paul, Minnesota 55133-3427 (US); RATHORE, Jitendra S., Saint Paul, Minnesota 55133-3427 (US)
(74) Representative: Vossius & Partner Patentanwälte Rechtsanwälte mbB
(86) International application number: PCT/IB2018/059835
(87) International publication number: WO 2019/116204

(56) References cited:
- US-A1- 2016 332 421

## Description

### Field of the Disclosure

This disclosure relates to transfer films which in a partially cured state are transferred to a substrate and subsequently fully cured.

### Background

Polymeric materials are finding increasing use in a wide range of applications. Many different classes of polymeric materials have found widespread use, such as adhesive materials. Adhesives have been used for a variety of marking, holding, protecting, sealing and masking purposes. Adhesive tapes generally comprise a backing, or substrate, and an adhesive. One type of adhesive, a pressure sensitive adhesive, is particularly preferred for many applications. Pressure sensitive adhesives are well known to one of ordinary skill in the art to possess certain properties at room temperature including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as pressure sensitive adhesives are polymers designed and formulated to exhibit the requisite viscoelastic properties resulting in a desired balance of tack, peel adhesion, and shear strength. The most commonly used polymers for preparation of pressure sensitive adhesives are natural rubber, synthetic rubbers (e.g., styrene/butadiene copolymers (SBR) and styrene/isoprene/styrene (SIS) block copolymers), various (meth)acrylate (e.g., acrylate and methacrylate) copolymers and silicones. Each of these classes of materials has advantages and disadvantages.

A class of adhesive materials have been developed that are able to be applied as an adhesive layer and then cured to give a strong adhesive bond. These types of adhesive materials go by different names. One name for this type of material is a "structural hybrid adhesive" such as described in US Patent No. 7,713,604 (Yang et al.) which describes an adhesive that is applied like a pressure sensitive adhesive and then cured to form a structural adhesive bond. Other names for this type of material are "B Stage adhesive" or "dual cure adhesive". By this it is meant that a preliminary curing mechanism is carried out to form an adhesive layer (the A Stage or first cure) and then the A stage adhesive layer is cured to form the final adhesive bond (the B Stage or second cure). Examples of B Stage silicone adhesives include US Patent Publication No. 2014/0322522 (Yoo) which describes a B-stageable silicone adhesive that is microencapsulated; US Patent No. 4,966,922 (Gross et al.) which describes a dual cure silicone adhesive involving curing mechanisms of moisture curing and onium salt initiated curing; and 7,105,584 (Chambers et al.) which describes a dual cure silicone adhesive involving curing mechanisms of moisture curing and UV-initiated curing.

US2016/332421 A1 shows curable compositions having curable silsesquioxanes and siloxane crosslinkers that react with the silsesquioxanes.

In optical applications, a wide range of material layers are used, some of these are adhesive, but often other types of layers are used. The formation of layers, such as protective layers, on optical substrates has frequently been achieved through the use of liquid coating materials. The liquid coating materials are coated onto the substrate and subsequently cured to form the layer. Examples of such layers are hardcoat layers which frequently include an organic binder matrix and functionalized nanoparticles that are dispersed in the organic binder matrix. As with any technology, this method of forming protective layers has both advantages and disadvantages. Among the advantages is that it is flexible (permitting a wide range of substrate sizes and shapes to be coated), and also it is relatively inexpensive. However, among the disadvantages are that the handling of liquids, especially if solvents are present in the liquid, can be inconvenient and may require special equipment and techniques. Therefore, transfer films have been developed, where the coating is "pre-made" as a film and the film is transferred to the substrate surface. In some cases, the transfer film is curable, so that after the film is transferred it can be cured on the substrate surface so that it adheres strongly to the substrate surface.

Using transfer tapes, not only can clear protective layers be created, such as hardcoats, but also the transfer films can be used to impart nanostructured or microstructured surfaces to substrates such as glass substrates. Nanostructures and microstructures on glass substrates are used for a variety of applications in display, lighting, architecture and photovoltaic devices, for example. In display devices the structures can be used for light extraction or light distribution. In lighting devices the structures can be used for light extraction, light distribution, and decorative effects. In photovoltaic devices the structures can be used for solar concentration and antireflection. Patterning or otherwise forming nanostructures and microstructures on large glass substrates can be difficult and cost-ineffective.

Lamination transfer methods that use a structured backfill layer inside a nanostructured sacrificial template layer as a lithographic etch mask have been disclosed. The backfill layer can be a glass-like material. However, these methods require removing the sacrificial template layer from the backfill layer while leaving the structured surface of the backfill layer substantially intact. The sacrificial template layer is typically removed by a dry etching process using oxygen plasma, a thermal decomposition process, or a dissolution process.

Recently, the PCT Publication No. 2016/160560 describes a dual-cure nanostructured transfer film that includes a template layer and a backfill layer disposed on the structured surface of the template layer, where the backfill layer includes a cross-linked polymer cured via different and independent curing mechanisms.

### Summary

Disclosed herein are dual cure transfer films, articles prepared from these transfer films, and methods of preparing and using these transfer films. The transfer films comprise a siloxane-based matrix formed by thermal curing of at least one siloxane comprising thermally curable groups as defined in claim 1, at least one silsesquioxane comprising UV-curable groups as defined in claim 1, and a UV photoinitiator. The silsesquioxane comprising UV-curable groups is dispersed within the siloxane-based matrix. The transfer film is an adhesive and can be cured by UV radiation to form a non-tacky cured layer, where the non-tacky cured layer is optically transparent.

Also disclosed are articles. The article comprises a first substrate with a first major surface and a second major surface, a layer comprising a first major surface and a second major surface, where the first major surface of the layer is in contact with the second major surface of the first substrate, and where the layer comprises a UV-cured transfer film. The transfer film comprises an adhesive comprising a siloxane-based matrix formed by thermal curing of at least one siloxane comprising thermally curable groups as defined in claim 1, at least one silsesquioxane comprising UV-curable groups as defined in claim 1, where the silsesquioxane comprising UV-curable groups is dispersed within the siloxane-based matrix, and a UV photoinitiator. The layer is non-tacky and optically transparent.

Also disclosed are methods of preparing articles. The method of preparing an article comprises preparing a transfer film with a first major surface and a second major surface, providing a first substrate with a first major surface and a second major surface, contacting the first major surface of the transfer film to the second major surface of the first substrate, and UV-curing the transfer film. The transfer film comprises a siloxane-based matrix formed by thermal curing of at least one siloxane comprising thermally curable groups as defined in claim 1, at least one silsesquioxane comprising UV-curable groups as defined in claim 1, where the silsesquioxane comprising UV-curable groups is dispersed within the siloxane-based matrix, and a UV photoinitiator. The transfer film is an adhesive and can be cured by UV radiation to form a non-tacky cured layer, where the non-tacky cured layer is optically transparent.

In some embodiments, preparing the transfer film comprises forming a curable mixture, coating the curable mixture on a releasing substrate, and thermally curing the thermally curable groups of the at least on siloxane of the curable mixture to provide a transfer film which is an adhesive layer. Forming the curable mixture comprises providing at least one siloxane with thermal curable groups as defined in claim 1, providing a thermally activated acid initiator, providing at least one silsesquioxane comprising UV-curable groups as defined in claim 1, providing at least one UV photoinitiator, dispersing the thermally activated acid initiator, the at least one UV photoinitiator, and the at least one silsesquioxane comprising UV-curable groups in the at least one siloxane with thermal curable groups to form the curable mixture.

### Detailed Description

The formation of layers, such as protective layers, on optical substrates has frequently been achieved through the use of liquid coating materials. Because of the disadvantages of handling and using liquid coating materials, transfer films have been developed, where the coating is "pre-made" as a film and the film is transferred to the substrate surface. In this way the coating is handled as a film without the need to handle messy liquids, and the transfer film can be curable, so that after the film is transferred it can be cured on the substrate surface so that it adheres strongly to the substrate surface.

Using transfer tapes, not only can clear protective layers be created, such as hardcoats, but also the transfer films can be used to impart nanostructured or microstructured surfaces to substrates such as glass substrates. Nanostructures and microstructures on glass substrates are used for a variety of applications in display, lighting, architecture and photovoltaic devices, for example. In display devices the structures can be used for light extraction or light distribution. In lighting devices the structures can be used for light extraction, light distribution, and decorative effects. In photovoltaic devices the structures can be used for solar concentration and antireflection.

Thus a need remains for transfer films that can be prepared, laminated and cured to a wide range of substrates to give desirable properties. Among these properties are optical transparency, strong adhesion to a variety of substrate surfaces including ones with low surface energy, thermal stability, weatherability, and low water absorption. In addition to these properties, in some instances it is desirable for the transfer films to impart a structured surface to the receptor substrate without sacrificing the other desirable properties.

The present disclosure relates to dual-cure transfer films. The term "transfer films" as used herein refers to free standing films that are partially tacky and can be laminated onto a receptor substrate surface. The transfer films are "dual-cure" because the transfer film is a partially cured film (i.e. it has undergone one curing step to form the transfer film) that is curable. Thus after the transfer film is laminated to a receptor substrate surface it undergoes a second curing step. It should be noted that "curing" as used herein refers to polymerization of polymerizable groups and is not synonymous with crosslinking. Crosslinking may occur during curing but curing does not require crosslinking.

In some embodiments, the transfer film is a flat, unstructured film. In other embodiments, the transfer film comprises a structured surface where the structured surface is retained after curing. That is to say that after the transfer film is cured, the cured transfer film has a structured surface.

The transfer film is formed by coating a curable resin system on a release liner and partially curing the curable resin system to form a stable, tacky film. This tacky film is laminated onto a receptor substrate and fully cured. In embodiments where the transfer film has a structured surface, the release liner is a structured release liner, and structural pattern of the transfer film is the inverse of the structural pattern on the surface of the structured release liner.

The surface of the transfer film not in contact with the releases liner, whether a structured or an unstructured release liner, is a planar surface that can be laminated to the surface of a receptor substrate, and subsequently cured. The resulting cured transfer film has a variety of desirable features including optical transparency. If the transfer film had a structured surface before curing it retains this structure after curing.

The two curing mechanisms, the curing mechanism that forms the transfer film and the curing mechanism that cures the transfer film, are different. In many embodiments the first cure type is a cationic cure mechanism and the second cure mechanism is a free-radical cure mechanism. In other less common embodiments, the first cure mechanism is a free-radical cure mechanism and the second cure mechanism is a cationic cure mechanism. One embodiment includes a thermal cationic first stage cure to form the transfer film and then an actinic radiation (UV) free-radical cure to fully cure the transfer film to the substrate. Other thermal cure systems could also be used in a thermal cure step, e.g., platinum-catalyzed thermal hydrosilylation cure between vinyl and hydridosilane species. Likewise other UV-initiated cure systems could be used in a UV cure step, e.g., click cure between vinyl and thiol species, or UV-activated hydrosilylation cure between vinyl and hydridosilane species in the presence of catalysts such as platinum(II) acetylacetonate or Trimethyl(methylcyclopentadienyl)platinum(IV).

Another advantage of the transfer films of this disclosure is that the transfer films are completely based on silicon-containing materials. The films are prepared from combinations of siloxanes and silsesquioxanes. This gives the transfer films that advantages of siloxane-based materials, such as adhesion to wide variety of substrates, thermal stability, and low water absorption.

The transfer films of this disclosure comprise a siloxane-based matrix formed by the thermal curing of at least one siloxane comprising thermally curable groups and at least one silsesquioxane comprising UV-curable groups dispersed within the siloxane-based matrix. The transfer films are curable by UV radiation to form non-tacky cured layers that are optically transparent. In some embodiments, the cured transfer films comprise a structured surface.

Also disclosed herein are articles that include the cured transfer film on the surface of a substrate. In some embodiments, the articles include a second substrate, where the cured transfer film is located between the two substrates and bonds the two substrates together.

Additionally, methods of preparing articles are disclosed, the methods comprising preparing the transfer films, and using the transfer films to prepare coatings on films or to adhere two substrates.

As used in this specification and the appended claims, the singular forms "a", "an", and "the" encompass embodiments having plural referents, unless the content clearly dictates otherwise. For example, reference to "a layer" encompasses embodiments having one, two or more layers. As used in this specification and the appended claims, the term "or" is generally employed in its sense including "and/or" unless the content clearly dictates otherwise.

The term "adhesive" as used herein refers to polymeric compositions useful to adhere together two adherends. The materials that are described as adhesives herein are tacky to the touch and are curable such that upon curing they are no longer tacky to the touch.

The terms "Tg" and "glass transition temperature" are used interchangeably. If measured, Tg values are determined by Differential Scanning Calorimetry (DSC) at a scan rate of 10°C/minute, unless otherwise indicated. Typically, Tg values for copolymers are not measured but are calculated using the well-known Fox Equation, using the monomer Tg values provided by the monomer supplier, as is understood by one of skill in the art

The terms "siloxane-based" as used herein refer to polymers or units of polymers that contain siloxane units. The terms silicone or siloxane are used interchangeably and refer to units with dialkyl or diaryl siloxane (-SiR₂O-) repeating units.

The term "hydrocarbon group" as used herein refers to any monovalent group that contains primarily or exclusively carbon and hydrogen atoms. Alkyl and aryl groups are examples of hydrocarbon groups.

The term "alkyl" refers to a monovalent group that is a radical of an alkane, which is a saturated hydrocarbon. The alkyl can be linear, branched, cyclic, or combinations thereof and typically has 1 to 20 carbon atoms. In some embodiments, the alkyl group contains 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, and ethylhexyl.

The term "aryl" refers to a monovalent group that is aromatic and carbocyclic. The aryl can have one to five rings that are connected to or fused to the aromatic ring. The other ring structures can be aromatic, non-aromatic, or combinations thereof. Examples of aryl groups include, but are not limited to, phenyl, biphenyl, terphenyl, anthryl, naphthyl, acenaphthyl, anthraquinonyl, phenanthryl, anthracenyl, pyrenyl, perylenyl, and fluorenyl.

The term "alkylene" refers to a divalent group that is a radical of an alkane. The alkylene can be straight-chained, branched, cyclic, or combinations thereof. The alkylene often has 1 to 20 carbon atoms. In some embodiments, the alkylene contains 1 to 18, 1 to 12, 1 to 10, 1 to 8, 1 to 6, or 1 to 4 carbon atoms. The radical centers of the alkylene can be on the same carbon atom (i.e., an alkylidene) or on different carbon atoms.

The term "heteroalkylene" refers to a divalent group that includes at least two alkylene groups connected by a thio, oxy, or -NR- where R is alkyl. The heteroalkylene can be linear, branched, cyclic, substituted with alkyl groups, or combinations thereof. Some heteroalkylenes are poloxyyalkylenes where the heteroatom is oxygen such as for example,

-CH₂CH₂(OCH₂CH₂)ₙOCH₂CH₂-.

The term "arylene" refers to a divalent group that is carbocyclic and aromatic. The group has one to five rings that are connected, fused, or combinations thereof. The other rings can be aromatic, non-aromatic, or combinations thereof. In some embodiments, the arylene group has up to 5 rings, up to 4 rings, up to 3 rings, up to 2 rings, or one aromatic ring. For example, the arylene group can be phenylene.

The term "heteroarylene" refers to a divalent group that is carbocyclic and aromatic and contains heteroatoms such as sulfur, oxygen, nitrogen or halogens such as fluorine, chlorine, bromine or iodine.

The term "aralkylene" refers to a divalent group of formula -R^{a}-Ar^{a}- where R^{a} is an alkylene and Ar^{a} is an arylene (i.e., an alkylene is bonded to an arylene).

The term "(meth)acrylate" refers to monomeric acrylic or methacrylic esters of alcohols. Acrylate and methacrylate monomers or oligomers are referred to collectively herein as "(meth)acrylates".

The terms "free radically polymerizable" and "ethylenically unsaturated" are used interchangeably and refer to a reactive group which contains a carbon-carbon double bond which is able to be polymerized via a free radical polymerization mechanism. "optically transparent" refers to an article, film or adhesive that has a high light transmittance over at least a portion of the visible light spectrum of 400 to 700 nm. The articles that are described as transparent have a visible light transmittance of at least 85% or even 90%. The term "transparent film" refers to a film having a thickness and when the film is disposed on a substrate, an image (disposed on or adjacent to the substrate) is visible through the thickness of the transparent film. In many embodiments, a transparent film allows the image to be seen through the thickness of the film without substantial loss of image clarity. In some embodiments, the transparent film has a matte or glossy finish.

Unless otherwise indicated, "optically clear" refers to an adhesive or article that has a high light transmittance over at least a portion of the visible light spectrum (about 400 to about 700 nm), and that exhibits low haze. Typically articles that are optically clear have a visible light transmittance of at least 90%, or even 95% and a haze of less than 5%.

As used herein, a "microstructured" surface means that the surface has a configuration of features in which at least 2 dimensions of the features are microscopic. As used herein, the term "microscopic" refers to features of small enough dimension so as to require an optic aid to the naked eye when viewed from a plane of view to determine its shape. One criterion is found in Modern Optical Engineering by W. J. Smith, McGraw-Hill, 1966, pages 104-105 whereby visual acuity "is defined and measured in terms of the angular size of the smallest character that can be recognized." Normal visual acuity is considered to be when the smallest recognizable letter subtends an angular height of 5 minutes of arc on the retina. At a typical working distance of 250 mm (10 inches), this yields a lateral dimension of 0.36 mm (0.0145 inch) for this object.

The term "nanostructures" as used herein, refers to features that range from about 1 nanometer to about 1000 micrometers in their longest dimension and includes microstructures. In this disclosure, "nanostructured" refers to structures that have features that are less than 1 micrometer, less than 750 nm, less than 500 nm, less than 250 nm, 100 nm, less than 50 nm, less than 10 nm, or even less than 5 nm. "Microstructured" refers to structures that have features that are less than 1000 micrometers, less than 100 micrometers, less than 50 micrometers, or even less than 5 micrometers.

Disclosed herein are transfer films that are completely based on silicon-containing materials. The transfer films of this disclosure comprise a siloxane-based matrix formed by the thermal curing of at least one siloxane comprising thermally curable groups, at least one silsesquioxane comprising UV-curable groups dispersed within the siloxane-based matrix, and at least one UV photoinitiator. The transfer films are curable by UV radiation to form non-tacky cured layers that are optically transparent. In some embodiments, the cured transfer films comprise a structured surface.

Three stages are associated with the formation of the final film article. Stage A (or A-Stage) is defined as the starting formulation in which no or negligible cure has occurred. Stage B (or B-Stage) is defined as the state in which the first of the two sets of curable groups has cured to an extent sufficient to give a film capable of functioning as an adhesive at the required surface (partial cure). Stage C (or C-Stage) is defined as the state in which the second of the two sets of curable groups has cured (full cure).

A wide range of siloxanes comprising thermally curable groups are suitable for forming the siloxane-based matrix of this disclosure. Among the thermally curable groups are epoxy groups. According to the present invention the at least one siloxane comprising thermally curable groups comprises a siloxane with epoxy functional groups. Epoxy groups are oxirane rings that are curable by a wide range of mechanisms including acid catalyzed homopolymerization. Typically, siloxane-based matrices of this disclosure are formed by acid catalyzed homopolymerization. Generally the epoxy-functional siloxane materials have pendant epoxy groups, meaning that branches from the siloxane chain contain the epoxy-functional groups. Examples of suitable materials include KBM-403, KBM-303, KBE-402, KBE-403 commercially available from Shin-Etsu Silicones. One particularly suitable epoxy-functional silicone is the epoxy phenyl silicone HP 1250 from Wacker Chemical Corp.

A wide range of thermally activated acid catalysts are suitable for use in the curable compositions of this disclosure. Many of the catalysts are metal based materials such as hexafluoroantimonate, commercially available as K-PURE CXC-1612 from King Industries. Typically the Stage A composition is heated to a temperature of greater than 100°C for at least 10 minutes, in some embodiments the Stage A composition is heated to a temperature of 130°C for at least 20 minutes. Typically, the thermally activated acid catalyst is present in an amount suitable to initiate epoxy homopolymerization. Typically, the thermally activated acid catalyst is present in an amount 0.01-5.0% by weight of the curable composition.

The Stage A reactive composition mixture can be coated onto the releasing substrate by a wide range of coating techniques depending upon the nature of the reactive composition mixture. In some embodiments, the reactive composition mixture contains solvent, in other embodiments the reactive composition mixture is 100% solids, meaning no solvent is present. The reactive composition mixture can be coated by such methods as knife coating, roll coating, gravure coating, rod coating, curtain coating, and air knife coating. The reactive composition mixture may also be printed by known methods such as screen printing or inkjet printing. The coated reactive composition mixture is generally 100% solids, but if solvent is used, the coated reactive mixture is dried to remove the solvent. Typically, to expedite drying of the coating, the coating is exposed to an elevated temperature by placing the coating, for example in an oven. Drying can be simultaneous with B stage thermal curing.

The Stage A reactive composition is coated onto a releasing substrate. A wide variety of releasing substrates are suitable. Typically the releasing substrate is a release liner or other film from which the reactive composition coating, upon curing to form the Stage B reactive composition, can be readily removed. Exemplary release liners include those prepared from paper (e.g., Kraft paper) or polymeric material (e.g., polyolefins such as polyethylene or polypropylene, ethylene vinyl acetate, polyurethanes, polyesters such as polyethylene terephthalate, and the like, and combinations thereof). At least some release liners are coated with a layer of a release agent such as a fluorosilicone-containing material or a fluorocarbon-containing material.

The releasing substrate may comprise a structured surface, such that when the structured surface is in contact with the reactive composition coating it can impart a structured surface to the reactive composition coating.

A wide range of release liners with a structured pattern present on its surface (frequently called microstructured release liners) are suitable. Typically the microstructured release liners are prepared by embossing. This means that the release liner has an embossable surface which is contacted to a structured tool with the application of pressure and/or heat to form an embossed surface. This embossed surface is a structured surface. The structure on the embossed surface is the inverse of the structure on the tool surface, that is to say a protrusion on the tool surface will form a depression on the embossed surface, and a depression on the tool surface will form a protrusion on the embossed surface.

In some embodiments, because the B stage transfer film is a tacky adhesive coating, the exposed surface may have a release liner disposed on it. Typically these optional release liners are not structured liners. In these embodiments, the B Stage transfer film has a first major surface and a second major surface where the first major surface is in contact with a first release liner which may or may not be a structured liner, and an optional second release liner that is not a structured liner disposed on the second major surface of the transfer film.

The Stage A transfer film also comprises at least one silsesquioxane comprising UV-curable groups. According to the present invention the at least one silsesquioxane comprising UV-curable groups comprises a (meth)acrylate-functional silsesquioxane. A silsesquioxane (SSQ) is a siloxane compound with the composition formula [(RSiO_{1.5})ₙ], where its main chain backbone is composed of Si-O bounds. Its name indicates that it is a siloxane with a unit composition formula containing 1.5 oxygen atoms (1.5 = sesqui) [Sil-sesqui-oxane]. As expressed by its composition [(RSiO_{1.5})ₙ], SSQ can be considered as an interim substance between inorganic silicon [SiO₂] (silica) and organic silicon [(R₂SiO)ₙ] (a siloxane or silicone). In contrast to the insolubility of a completely inorganic material like silica, the organic groups of the SSQ permits it to dissolve in and form homogeneous blends with a range of organic materials. SSQ can take a number of different types of skeletal structures, including linear (sometimes called ladder) structures, cage structures, and branched structures which can be branched versions of either caged or linear structures. These different types of structures are shown below:

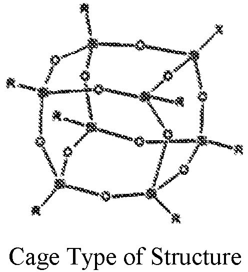

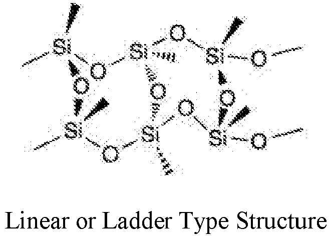

Among the caged structural types, POSS (polyhedral oligomeric silsesquioxane) are among the most common, and the structure shown above is an example of a POSS.

Silsesquioxanes have traditionally been synthesized by the hydrolysis of organotrichlorosilanes. An idealized synthesis is shown in Reaction Scheme A below:

8 R^{a}SiCl₃ + 12 H₂O → [R^{a}SiO_{3/2}]₈ + 24 HCl Reaction Scheme A

Depending on the R^{a} substituent, the exterior of the cage can be further modified. Generally, R^{a} is a hydrogen atom, an alkyl group, an aryl group, or an alkoxy group.

The silsesquioxanes of this disclosure are UV curable silsesquioxanes, meaning that they include curable groups that are free radically polymerizable. In some embodiments the curable silsesquioxanes are curable POSS materials, in other embodiments the curable silsesquioxanes are curable branched materials.

Examples of curable POSS materials include the commercially available POSS acrylate-functional POSS cage material MA0736 available from Hybrid Plastics, and the corresponding methacrylate-functional POSS cage material MA0735 also available from Hybrid Plastics. The structure for MA0736 is shown below.

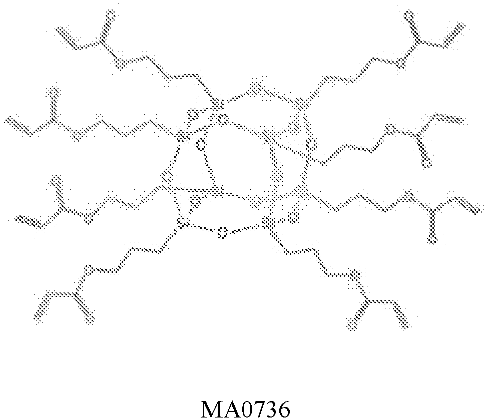

Also suitable are curable branched silsesquioxane network materials such as those described in PCT Publication No. WO 2015/088932 (Rathore et al.).

In some embodiments, the curable silsesquioxane polymer that includes a three-dimensional branched network having the formula: 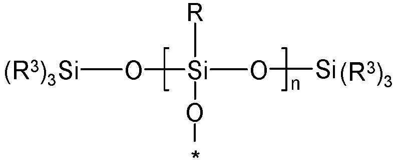 wherein the oxygen atom at the * is bonded to another Si atom within the three-dimensional branched network, R is an organic group comprising an ethylenically unsaturated group, and R³ is independently a non-hydrolyzable group. In typical embodiments, R³ is C₁-C₁₂ alkyl optionally comprising halogen substituents, aryl, or a combination thereof. In certain embodiments of the curable silsesquioxane polymer, R has the formula -Y-Z, as will subsequently be described.

In other embodiments, the curable silsesquioxane polymer that includes a three-dimensional branched network having the formula: 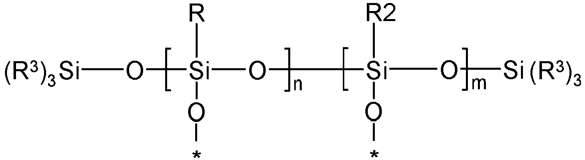 wherein the oxygen atom at the * is bonded to another Si atom within the three-dimensional branched network, R is an organic group comprising an ethylenically unsaturated group; R2 is an organic group that is epoxy functional; R³ is a non-hydrolyzable group; and n or n+m is an integer of greater than 3. In certain embodiments of the curable silsesquioxane polymer, R2 has the formula -Y-X, as will subsequently be described.

For embodiments wherein the curable silsesquioxane polymer is a copolymer comprising both n and m units, the sum of n + m is an integer of greater than 3. In certain embodiments, n+m is an integer of at least 10. In certain embodiments, n+m is an integer of no greater than 200. In certain embodiments, n+m is an integer of no greater than 175, 150, or 125. In some embodiments, n and m are selected such the copolymer comprises at least 25, 26, 27, 28, 29, or 30 mol% of repeat units comprising ethylenically unsaturated group(s) R. In some embodiments, n and m are selected such the copolymer comprises no greater than 85, 80, 75, 70, 65, or 60 mol% of repeat units comprising ethylenically unsaturated group(s) R.

In some embodiments, the curable silsesquioxane polymer that includes a three-dimensional branched network which is a reaction product of a compound having the formula Z-Y-Si(R¹)₃. In this embodiment, R has the formula -Y-Z.

In other embodiments, the curable silsesquioxane copolymer that includes a three-dimensional branched network which is a reaction product of a compound having the formula Z-Y-Si(R¹)₃ and a compound having the formula X-Y-Si(R¹)₃. In this embodiment, R has the formula -Y-Z and R2 has the formula -Y-X.

The Y group is a (covalent) bond, or a divalent group selected from alkylene group, arylene, alkyarylene, and arylalkylene group. In certain embodiments, Y is a (C1-C20)alkylene group, a (C6-C12)arylene group, a (C6-C12)alk(C1-C20)arylene group, a (C6-C 12)ar(C1-C20)alkylene group, or a combination thereof.

The group Z is an ethylenically unsaturated group selected from a vinyl group, a vinylether group, a (meth)acryloyloxy group, and a (meth)acryloylamino group (including embodiments wherein the nitrogen is optionally substituted with an alkyl such as methyl or ethyl). Typically, Z is a (meth)acryloyloxy group.

The X group typically comprises an epoxide ring.

Curable silsesquioxane polymers can be made by hydrolysis and condensation of reactants of the formula Z-Y-Si(R¹)₃. Examples of such reactants include vinyltriethoxysilane, allyltriethoxysilane, allylphenylpropyltriethoxysilane, 3-butenyltriethoxysilane, docosenyltriethoxysilane, and hexenyltriethoxysilane. Condensation of such reactants can be carried out using conventional techniques, as exemplified in the examples section. In some embodiments, the curable silsesquioxane polymers are made by the hydrolysis and condensation of reactants of the formula Z-Y-Si(R¹)₃ and X-Y-Si(R¹)₃.

In each of the formulas Z-Y-Si(R¹)₃ and X-Y-Si(R¹)₃, R¹ is independently a hydrolyzable group that is converted to a hydrolyzed group, such as -OH, during hydrolysis. After hydrolysis, the -OH groups are further reacted with an end-capping agent to convert the hydrolyzed group, e.g. -OH, to -OSi(R³)₃.

Various alkoxy silane end-capping agents are known. In some embodiments, the end-capping agent has the general structure R⁵OSi(R³)₃ or O[Si(R³)₃]₂ wherein R⁵ is a hydrolyzable group such as methoxy or ethoxy and R³ is independently a non-hydrolyzable group. Thus, R³ generally lacks an alkoxy group. R³ is independently C₁-C₁₂ alkyl, aryl (e.g. phenyl), or combination thereof; that optionally comprises halogen substituents (e.g. chloro, bromo, fluoro). The optionally substituted alkyl group may have a straight, branched, or cyclic structure. In some embodiments, R³ is C₁-C₄ alkyl optionally comprising halogen substituents.

The B Stage transfer film also comprises a UV photoinitiator, which is a photoinitiator which is activated by ultraviolet (UV) radiation. Suitable free-radical photoinitiators can be selected from benzophenone, 4-methylbenzophenone, benzoyl benzoate, phenylacetophenones, 2,2-dimethoxy-2-phenylacetophenone, alpha,alpha-diethoxyacetophenone, 1-hydroxy-cyclohexyl-phenyl-ketone (available under the trade designation IRGACURE 184 from BASF Corp., Florham Park, NJ), 2-hydroxy-2-methyl-1-phenylpropan-1-one, bis-(2,6-dimethoxybenzoyl)-2,4,4-trimethylpentyl phosphine oxide, 2-hydroxy-2-methyl-1-phenylpropan-1-one, 2-hydroxy-2-methyl-1-phenylpropan-1-one (available under the trade designation DAROCURE 1173 from BASF Corp.), 2,4,6-trimethylbenzoyl-diphenylphosphine oxide, and combinations thereof (e.g., a 50:50 by wt. mixture of 2,4,6-trimethylbenzoyl-diphenylphosphine oxide and 2-hydroxy-2-methyl-1-phenylpropan-1-one, available under the trade designation DAROCURE 4265 from BASF Corp.).

The UV photoinitiator is typically present in the B Stage composition in an amount of at least 0.01 percent by weight (wt-%), based on the total weight of curable material in the coating composition. A photoinitiator is typically present in a coating composition in an amount of no greater than 5 wt-%, based on the total weight of curable material in the coating composition.

In illustrative embodiments, the Stage A transfer film is formed by mixing an epoxy-functional siloxane, an acid generating thermally activated catalyst, a (meth)acrylate-functional silsesquioxane, and a UV photoinitiator to form the A stage mixture. The A stage mixture is coated onto a release substrate to form a curable coating. Thermal curing of the epoxy-functional siloxane, generates a siloxane matrix with a (meth)acrylate-functional silsesquioxane and a UV photoinitiator dispersed in the siloxane matrix, to form the B-stage film. This partially cured (or B-stage) film has an elastic modulus value that is less than 0.3 x 10⁵ Pa which provides a pressure-sensitive adhesive-like tack to a variety of surfaces that is stable over time. In addition, this partially cured (or b-stage) film has good wet-out and adhesion to a wide range of substrates.

The partially cured (or B-stage) film should have a modulus value that is no more than Dahlquist Criterion (0.3×10⁵ Pa or 3×10⁶ dynes/cm² at room temperature when measured at a frequency of about 1 Hz), which provides a pressure-sensitive adhesive-like tack to a variety of surfaces that is stable over time. This is a criterion for tack and has been given the name "Dahlquist criterion for tack" after the scientist who studied this phenomenon (see Dahlquist, C.A., in Adhesion Fundamentals and Practice, The Ministry of Technology (1966) McLaren and Sons, Ltd., London). Above this modulus, adhesive failure occurs as observed from the small strains at separation.

It should be noted that while the B Stage transfer film is an adhesive, but upon curing by UV radiation the resulting film is non-tacky. The non-tacky film is optically transparent, and in some embodiments may be optically clear.

Also disclosed herein are articles comprising a first substrate with a first major surface and a second major surface, a layer comprising a first major surface and a second major surface, wherein the first major surface of the layer is in contact with the second major surface of the first substrate. The layer comprises a UV-cured transfer film, wherein the transfer film is the B Stage transfer film described above that has been UV cured. The layer is non-tacky and optically transparent.

A wide variety of substrates are suitable as the first substrate for the articles of this disclosure. The substrate may be a rigid substrate or a non-rigid substrate. Examples of rigid substrates include glass plates, relatively thick polymeric plates such as polymethyl methacrylate (PMMA) plates and polycarbonate (PC) plates, and the exterior surface of a device. Examples of suitable devices include, for example OLED (Organic Light Emitting Diode) devices. In many embodiments, the first substrate is a optically clear substrate.

Examples of suitable non-rigid substrates include polymeric films. Examples of polymeric films include films comprising one or more polymers such as cellulose acetate butyrate; cellulose acetate propionate; cellulose triacetate; poly(meth)acrylates such as polymethyl methacrylate; polyesters such as polyethylene terephthalate, and polyethylene naphthalate; copolymers or blends based on naphthalene dicarboxylic acids; polyether sulfones; polyurethanes; polycarbonates; polyvinyl chloride; syndiotactic polystyrene; cyclic olefin copolymers; and polyolefins including polyethylene and polypropylene such as cast and biaxially oriented polypropylene. The substrate may comprise single or multiple layers, such as polyethylene-coated polyethylene terephthalate. The substrate may be primed or treated to impart some desired property to one or more of its surfaces. Examples of such treatments include corona, flame, plasma and chemical treatments.

One particularly suitable class of film substrates are optical films. As used herein, the term "optical film" refers to a film that can be used to produce an optical effect. The optical films are typically polymer-containing films that can be a single layer or multiple layers. The optical films can be of any suitable thickness. The optical films often are at least partially transmissive, reflective, antireflective, polarizing, optically clear, or diffusive with respect to some wavelengths of the electromagnetic spectrum (e.g., wavelengths in the visible ultraviolet, or infrared regions of the electromagnetic spectrum). Exemplary optical films include, but are not limited to, visible mirror films, color mirror films, solar reflective films, diffusive films, infrared reflective films, ultraviolet reflective films, reflective polarizer films such as brightness enhancement films and dual brightness enhancement films, absorptive polarizer films, optically clear films, tinted films, dyed films, privacy films such as light-collimating films, and antireflective films, antiglare films, soil resistant films, and anti-fingerprint films.

In these embodiments, the B Stage curable transfer film has been applied to the surface of the first substrate and cured to form a surface coating layer. These surface coating layers are optically transparent. These surface coating layers can be protective layers, for example.

In some embodiments, the second major surface of the cured layer comprises a structured surface. The structures may have a wide variety of sizes and shapes. Typically, the structures are microstructures or nanostructures.

In some embodiments, the articles of this disclosure further comprise a second substrate with a first major surface and a second major surface, wherein the first major surface of the second substrate is in contact with, and adhesively bonded with the second major surface of the layer.

As was mentioned above, the B Stage transfer film of this disclosure is an adhesive layer and thus can be used to bond two substrates. Thus, the B Stage transfer film is contacted to the two substrates prior to UV curing. Upon curing, a strong adhesive bond is formed between the two substrates.

The second substrate may be the same as the first substrate or it may different. Like the first substrate, in many embodiments the second substrate is an optically clear substrate.

Also disclosed are methods for preparing articles. The methods comprise preparing a transfer film with a first major surface and a second major surface, wherein the transfer film comprises the B Stage transfer films described above, providing a first substrate with a first major surface and a second major surface, contacting the first major surface of the transfer film to the second major surface of the first substrate, and UV-curing the transfer film.

Curing of the curable transfer film may be effected in a variety of ways. The UV photoinitiator or initiators are activated by exposure to UV light. The transfer film can thus be cured by exposure to UV light generated by any suitable source such as UV lamps. In some embodiments, the articles are cured by UV light by passing the article to be cured beneath a bank of UV lamps through the use of conveyor belt or other similar conveyance.

The preparation of B Stage transfer films comprise preparing a reaction mixture. The reaction mixture comprises at least one siloxane with thermally curable groups, a thermally activated acid initiator, at least one silsesquioxane comprising UV-curable groups, and at least one UV photoinitiator, where the thermally activated acid initiator, the at least one UV photoinitiator, and the at least one silsesquioxane comprising UV-curable groups are dispersed in the at least one siloxane with thermal curable groups. The reaction mixture is coated on a releasing substrate, and thermally curing the siloxane with thermally curable groups to provide a transfer film which is an adhesive layer. The materials and releasing substrates are described above.

The releasing substrate may be removed either prior to UV curing or after UV curing. In some embodiments, the releasing substrate comprises a structured releasing substrate. Typically, when the releasing substrate comprises a structured releasing substrate, the releasing substrate is not removed prior to UV curing, so that the structures are cured while in contact with the structured releasing substrate. In this way the structures do not collapse prior to curing. In these embodiments, after UV-curing the structured releasing substrate is removed to expose a structured surface on the second major surface of the cured layer.

In other embodiments, the method further comprises providing a second substrate with a first major surface and a second major surface, and contacting the first major surface of the second substrate to the second major surface of the transfer film prior to UV-curing. In this way, articles of the type: first substrate/cured transfer film/second substrate, can be formed.

### Examples

All-siloxane dual-cure resin formulations were prepared and tested. The materials were applied to substrates, thermally and UV cured, and the optical, adhesive and thermal decomposition properties were evaluated as shown in the following examples. These examples are merely for illustrative purposes only and are not meant to be limiting on the scope of the appended claims. All parts, percentages, ratios, etc. in the examples and the rest of the specification are by weight, unless noted otherwise. Solvents and other reagents used were obtained from Sigma-Aldrich Chemical Company, St. Louis, Missouri unless otherwise noted.

**Table 1. Table of materials used in the examples**

| **Material Abbreviation** | **Description** |
|---|---|
| M1 | Monomer 3-Glycidyloxypropyltrimethoxysilane available from Gelest, Inc., Morrisville, PA as GPTMS |
| M2 | Monomer Methacryloxypropyltrimethoxysilane available from Gelest, Inc., Morrisville, PA as MAOPTMS |
| LINER1 | A release liner prepared as described in paragraphs 96 - 98 of U.S. published application 2009/0000727. |
| SR1 | Silicone Resin, Epoxy phenyl silicone available from Wacker Chemical Corporation Adrian, MI. as SILRES HP 1250 |
| HP1 | Hybrid-Polymer, Acrylate-functional SSQ available from Microresist Gmbh Berlin, Germany as ORMOCLEAR 30 |
| TC1 | Thermal catalyst, thermal acid generator available from King Industries Norwalk, CT. as K-PURE CXC-1612 |
| PH1 | Photoinitiator 2-Hydroxy-2-methyl-1-phenyl-propan-1-one available from BASF Wyandotte, MI. as IRGACURE 1173 |
| R1 | Resin, dipentaerythritol pentaacrylate available from Sartomer Americas Exton, PA. as SR399 |
| R2 | Resin 1,6-hexanediol diacrylate, HDDA, available from Sartomer Americas Exton, PA. as SR238 |
| PH2 | Photoinitiator Diphenyl (2, 4, 6 trimethylbenzoyl) phosphine oxide, available from BASF Corp., Wyandotte, MI. as IRGACURE TPO |

### Test Methods

### Thermal Stability Test Method

Pieces of the fully cured resins (about 10 mg each) were placed in a tared aluminum pan inside a Q500 Thermogravimetric Analyzer from TA Instruments (New Castle, DE). The heating rate selected was 10°C/ min up to 550°C. The decomposition temperatures were defined by the temperatures at which the cured resin has decomposed to 95% (T_{d5%}), 90% (T_{d10%}) and 80% (T_{d20%}) of its original weight. Results are shown in Table 6.

### Optical Test Method

The measurement of average % transmission, haze and clarity was conducted with a haze meter BYK Hazegard Plus from BYK Gardiner (Columbia, MD) based on ASTM D1003-11. Data was taken on three different spots on each film and an average was recorded. Results are shown in Table 3.

### Peel Force Test Method

Peel adhesion is the force required to remove a coated flexible sheet of material from a test panel measured at a specific angle and rate of removal. Isopropyl alcohol and a cleanroom wipe were used to clean the glass slide prior to film application. The b-staged coating samples were cut into 1" wide strips. After lamination and prior to testing, the samples were equilibrated at a room temperature, 23°C and relative humidity of 50%, for 15 minutes. Peel adhesion was measured as a 180 degree peel back at a crosshead speed of 12in/min using IMASS 2100 Slip/Peel Tester from IMASS, Inc. (Accord, MA). The peel adhesion force is reported as an average of three replicates, in ounces per inch. Results are shown in Table 4.

### Adhesion Test Method

A strip of new, unused 810 SCOTCH tape (available from 3M Company, St. Paul MN) was pressed down to the fully- cured (C-stage) adhesive with a squeegee for two seconds then rapidly pulled up. Any amount of adhesive that was removed was recorded as a fail. The films were scored by assigning a "1" to a pass, and "0" to a fail. It was important there were no bubbles caused by debris between the adhesive and the substrate and the test was not conducted on an edge as both artifacts could cause a failure. On the glass substrate, three tape peels per sample were performed and averaged to give the values below. On the silicon nitride substrate, only one tape peel per sample was performed. Results are shown in Table 5.

### Cross-Hatch Adhesion Test Method

ASTM D3359.17656-1 defines parameters for the cross-hatch adhesion test. This test defines a method to score 8 overlapping right angle cuts (4 in one direction, 4 in another) in a cured resin on a substrate in a pattern that resembles a hash mark (#). A piece of polyester tape with silicone adhesive (3M Polyester Tape 8992 Green, 3M Company St. Paul, MN) was laminated over the cut and then rapidly pulled up. A score was given based on the number of squares (defined by the spaces in the hash mark) that remain on the substrate. Results are shown in Table 5.
5- The edges of the cuts were completely smooth with no squares of the lattice detached.
4- Small flakes of the coating were detached at intersections. Approximately 5% of the area was affected.
3- Flakes of the coating were detached along edges and at intersections of cuts. The area affected was approximately 15% of the lattice.
2- The coating flaked along the edges and on parts of the squares. The area affected was 15% to 35% of the lattice.
1- The coating flaked along the edges of cuts in large ribbons and whole squares had detached. The area affected was 35% to 65% of the lattice.
0- Flaking and detachment was greater than 65% of the lattice.

### Example Preparation

### Synthesis of Glycidoxypropyl-co-Methacryloxypropyl silsesquioxane (DC-SSQ)

A dual-cure silsesquioxane polymer (DC-SSQ) was prepared according to the procedure described in Example 1 of PCT application WO 2015/088932 by using the following monomers for the reaction: M1 (40 g) and M2 (60 g).

### Example Formulations

Formulations were mixed in an amber vial until homogenous. Ethyl acetate was used as a solvent to dilute the formulations to approximately 50% solids by weight. Table 2 lists the formulations for each Example.

**Table 2. Formulations**

| Example | SR1 (w%) | HP1 (w%) | DC-SSQ (w%) | TC1 (% total resin solids) | PH1 (% total resin solids) |
|---|---|---|---|---|---|
| E1 | 25.0 | 41.7 | 33.3 | 1.0 | 0.5 |
| E2 | 30.0 | 50.0 | 20.0 | 1.0 | 0.5 |
| E3 | 35.0 | 60.0 | 6.7 | 1.0 | 0.5 |
| E4 | 0.0 | 0.0 | 100.0 | 1.0 | 0.5 |
| E5 | 37.5 | 62.5 | 0.0 | 1.0 | 0.5 |
| E6 | 100.0 | 0.0 | 0.0 | 1.0 | 0.5 |
| E7 | 0.0 | 100.0 | 0.0 | 1.0 | 0.5 |

Coatings for the optical tests were made on 2 mil (0.051 mm) thick primed PET using an Elcometer 3530 film applicator bar with an adjustable gap. The gap was set to 30 micrometers for each Example. The coatings were placed in an exhausted oven at 130°C for 20 minutes to provide B stage thermal curing. Peel Force measurements were taken on the b-staged coatings. C stage UV curing was performed using a Fusion Light Hammer system (Heraeus, Gaithersburg, MD) using an "H-bulb" with two passes of the conveyor belt running at 30 feet per minute. The Thermal Stability and Optical Tests were performed on the C-stage fully cured materials.

A microstructured film template was created using cast and cure microreplication. The substrate was primed 0.002 inch (0.051 mm) thick PET (MELINEX 454 Teijin DuPont Films, Chester, VA). The replicating resin was a 75/25 (w/w) blend of R1 and R2 with a photoinitator package comprising 1 wt. % PH1, and 0.5 wt. % PH2. Replication of the resin was conducted at 20 ft/min (6.1 m/min) on a replication tool temperature at 137 deg F (58 deg C). The replication tool was patterned with a diffractive nanostructure. The structure cut into the copper tool was a sine wave with the dimensions of a 12 micrometer pitch and 2.5 micrometer peak to valley height. Radiation from a Fusion "D" lamp (Heraeus, Gaithersburg, MD) operating at 600 W/in was transmitted through the film to cure the resin while in contact with the tool. The cured resin was then separated from the tool and wound into a roll. To allow subsequent removal of materials cast into it, the microstructured film template was surface treated in a low pressure plasma chamber. After removal of the air from the chamber, perfluorohexane (C6F14) and oxygen were introduced to the chamber at flow rates of 600 and 300 sccm, respectively with a total chamber pressure of 300 mTorr. The film was treated with RF power of 3000W as the film moved through the treatment zone at 40 ft/min (12.3 m/min).

Coatings for the lamination transfer tests were made on the release-treated microstructured film template using an Elcometer 3530 film applicator bar with an adjustable gap. The gap was set to 30 micrometers for each Example. The coatings were placed in an exhausted oven at 130°C for 20 minutes to provide B stage thermal curing. The exposed side of the coating was laminated with a release liner film prepared as described in paragraphs 96 - 98 of U.S. published application 2009/0000727. Glass slides (Fisher Scientific) and Silicon Nitride (500 nm PECVD deposited Si₃N₄ on silicon dioxide wafer (Silicon Valley Microelectronics, Inc, San Jose, CA) were cleaned with electronics-grade detergent and rinsed well with distilled water, dipped in methanol and dried well with nitrogen. They were placed on a hotplate to dehydrate the surface at 230°C for 10 minutes. The slides were then exposed to an oxygen plasma in a YES G1000 system (Yield Engineering Systems, Inc., Livermore, California) (O₂=60sccm, time = 10min, RF= 300W) to remove any residual hydrocarbon contamination.

Sections of the films coated onto the release-treated nanostructure were cut into 3 x 2" rectangles, the release liner was removed, and the b-staged adhesive was laminated coating side down onto the cleaned substrates and then allowed to build adhesion for 30 minutes at ambient temperature prior to UV-curing the glass slide/coating stack. UV curing was performed using a Fusion Light Hammer system (Heraeus, Gaithersburg, MD) using a standard mercury vapor "H-bulb" with two passes of the conveyor belt running at 30 feet per minute. After UV-curing, the release-treated nanostructure film was then removed to leave behind an inverse replica of the nanostructure on the substrates. The quality of the transferred nanostructures was observed and the Adhesion and Cross-Hatch Adhesion Tests were performed on the transferred materials.

### Results

**Table 3. B-stage coating quality and optical data on c-stage films**

| **Example** | **Nominal Thickness [µm]** | **Comments *** | **Transmission** (%)** | **Haze** (%)** | **Clarity** (%)** |
|---|---|---|---|---|---|
| E1 | 31 | tacky | 93.9 ± 0.06 | 8.05 ± 0.26 | 74.1 ± 1.71 |
| E2 | 20 | tacky, | 93.5 ± 0.36 | 21.9 ± 1.08 | 80.7 ± 1.34 |
| E3 | 14 | tacky | 93.4 ± 0.25 | 4.07 ± 0.18 | 97.6 ± 0.1 |
| E4 | 23 | not tacky | 94.5± 0.25 | 1.17 ± 0.23 | 77.8 ± 0.72 |
| E5 | 13 | tacky | 93.8 ± 0.12 | 2.03 ± 1.66 | 97.4 ± 0.23 |
| E6 | 11 | not tacky | 94 ± 0.1 | 1.01 ± 0.52 | 99.5 ± 0.1 |
| E7 | 20 | tacky/gooey | 93.5 ± 0.12 | 1.83 ± 0.73 | 96.7 ± 0.4 |

| | | | | | |
|---|---|---|---|---|---|
| *the b-staged films were tested for qualitative tack level by touching with a gloved finger ** the optical performance was measured on C-staged, flat films | | | | | |

**Table 4. Peel Force on glass for b-staged material**

| **Example** | **average [oz/in]** | **average [N/dm]** |
|---|---|---|
| E1 | 0.18 ± 0.015 | 0.20 |
| E2 | 0.28 ± 0.013 | 0.31 |
| E3 | 0.93 ± 0.046 | 1.02 |
| E4 | 0.02 ± 0.011 | 0.02 |
| E5 | 0.90 ± 0.05 | 0.98 |
| E6 | 0.06 ± 0.01 | 0.07 |
| E7 | 1.32 ± 0.11 | 1.44 |

**Table 5. Lamination transfer and adhesion tests on glass and silicon nitride from 0 to 5 (0 being the worst performance, 5 being the best performance)**

| | | | **Scotch Tape Peel Test** | | **Cross-Hatch Test** | |
|---|---|---|---|---|---|---|
| **Example** | **Film Thickness [µm]** | **Nanostructure Transfer? (Y/N)** | **Glass** | **Silicon Nitride** | **Glass** | **Silicon Nitride** |
| E1 | 20 | N | 0 | 0 | 0 | 0 |
| E2 | 22 | Y | 5 | 5 | 4 | 5 |
| E3 | 13 | Y | 5 | 5 | 5 | 5 |
| E4 | 17 | N | 2 | 5 | 0 | 0 |
| E5 | 18 | Y | 2 | 0 | 0 | 0 |
| E6 | 16 | N | 0 | 0 | 0 | 0 |
| E7 | 17 | Y | 5 | 5 | 0 | 0 |

**Table 6. Thermal Stability (°C)**

| **Example** | **T_{d5%}** | **T_{d10%}** | **T_{d20%}** |
|---|---|---|---|
| E1 | 326 | 371 | 423 |
| E2 | 343 | 394 | 436 |
| E3 | 334 | 382 | 441 |
| E4 | 311 | 340 | 364 |
| E5 | 337 | 392 | 437 |
| E6 | 309 | 374 | 430 |
| E7 | 370 | 407 | 456 |

## Claims

1. A transfer film comprising:
a siloxane-based matrix formed by thermal curing of at least one siloxane comprising thermally curable groups;
at least one silsesquioxane comprising UV-curable groups; and
a UV photoinitiator; wherein the silsesquioxane comprising UV-curable groups is dispersed within the siloxane-based matrix, wherein the transfer film is an adhesive and can be cured by UV radiation to form a non-tacky cured layer, wherein the non-tacky cured layer is optically transparent,
wherein optically transparent refers to a light transmittance of at least 85% over at least a portion of the visible light spectrum of 400 to 700 nm,
wherein the at least one siloxane comprising thermally curable groups comprises a siloxane with epoxy functional groups, and
wherein the at least one silsesquioxane comprising UV-curable groups comprises a (meth)acrylate-functional silsesquioxane.

2. The transfer film of claim 1, wherein the transfer film comprises a first major surface and a second major surface, wherein the first major surface is disposed on a release liner.

3. The transfer film of claim 1, wherein the at least one silsesquioxane comprising UV-curable groups also comprises thermal curable groups.

4. An article comprising:
a first substrate with a first major surface and a second major surface;
a layer comprising a first major surface and a second major surface, wherein the first major surface of the layer is in contact with the second major surface of the first substrate, wherein the layer comprises a UV-cured transfer film, wherein the transfer film comprises:
a siloxane-based matrix formed by thermal curing of at least one siloxane comprising thermally curable groups;
at least one silsesquioxane comprising UV-curable groups, wherein the silsesquioxane comprising UV-curable groups is dispersed within the siloxane-based matrix; and
a UV photoinitiator; wherein the transfer film is an adhesive, and wherein the layer is non-tacky and optically transparent,
wherein the at least one siloxane comprising thermally curable groups comprises a siloxane with epoxy functional groups, and
wherein the at least one silsesquioxane comprising UV-curable groups comprises a (meth)acrylate-functional silsesquioxane,
wherein optically transparent refers to a light transmittance of at least 85% over at least a portion of the visible light spectrum of 400 to 700 nm.

5. The article of claim 4, wherein the second major surface of the layer comprises a structured surface.

6. The article of claim 4, further comprising a second substrate with a first major surface and a second major surface, wherein the first major surface of the second substrate is in contact with, and adhesively bonded with the second major surface of the layer.

7. A method of preparing an article comprising:
preparing a transfer film with a first major surface and a second major surface, wherein the transfer film comprises:
a siloxane-based matrix formed by thermal curing of at least one siloxane comprising thermally curable groups;
at least one silsesquioxane comprising UV-curable groups, wherein the silsesquioxane comprising UV-curable groups is dispersed within the siloxane-based matrix; and
a UV photoinitiator; wherein the transfer film is an adhesive and can be cured by UV radiation to form a non-tacky cured layer, wherein the non-tacky cured layer is optically transparent,
wherein the at least one siloxane comprising thermally curable groups comprises a siloxane with epoxy functional groups, and
wherein the at least one silsesquioxane comprising UV-curable groups comprises a (meth)acrylate-functional silsesquioxane;
providing a first substrate with a first major surface and a second major surface;
contacting the first major surface of the transfer film to the second major surface of the first substrate; and
UV-curing the transfer film;
wherein optically transparent refers to a light transmittance of at least 85% over at least a portion of the visible light spectrum of 400 to 700 nm.

8. The method of claim 7, wherein preparing a transfer tape comprises:
providing at least one siloxane with thermal curable groups, wherein the at least one siloxane with thermally curable groups comprises a siloxane with epoxy functional groups;
providing a thermally activated acid initiator;
providing at least one silsesquioxane comprising UV-curable groups, wherein the at least one silsesquioxane comprising UV-curable groups comprises a (meth)acrylate-functional silsesquioxane;
providing at least one UV photoinitiator;
dispersing the thermally activated acid initiator, the at least one UV photoinitiator, and the at least one silsesquioxane comprising UV-curable groups in the at least one siloxane with thermal curable groups to form a curable mixture;
coating the curable mixture on a releasing substrate; and
thermally curing the siloxane with thermally curable groups to provide a transfer film which is an adhesive layer.

## Patentansprüche

1. Eine Transferfolie, umfassend:
eine Matrix auf Siloxanbasis, die durch thermisches Härten von mindestens einem Siloxan, umfassend thermisch härtbare Gruppen, gebildet wird;
mindestens ein Silsesquioxan, umfassend UV-härtbare Gruppen; und
einen UV-Photoinitiator; wobei das Silsesquioxan, umfassend UV-härtbare Gruppen, in der Matrix auf Siloxanbasis dispergiert ist, wobei die Transferfolie ein Kleber ist und durch UV-Strahlung gehärtet werden kann, um eine nicht klebrige, gehärtete Schicht zu bilden, wobei die nicht klebrige, gehärtete Schicht optisch transparent ist,
wobei sich optisch transparent auf eine Lichtdurchlässigkeit von mindestens 85 % über mindestens einen Teil des sichtbaren Lichtspektrums von 400 bis 700 nm bezieht,
wobei das mindestens eine Siloxan, umfassend thermisch härtbare Gruppen, ein Siloxan mit Epoxid-funktionellen Gruppen umfasst, und
wobei das mindestens eine Silsesquioxan, umfassend UV-härtbare Gruppen, ein (Meth)acrylat-funktionelles Silsesquioxan umfasst.

2. Die Transferfolie nach Anspruch 1, wobei die Transferfolie eine erste Hauptoberfläche und eine zweite Hauptoberfläche umfasst, wobei die erste Hauptoberfläche auf einer Trennfolie angeordnet ist.

3. Die Transferfolie nach Anspruch 1, wobei das mindestens eine Silsesquioxan, umfassend UV-härtbare Gruppen, auch thermisch härtbare Gruppen umfasst.

4. Ein Gegenstand, umfassend:
ein erstes Substrat mit einer ersten Hauptoberfläche und einer zweiten Hauptoberfläche;
eine Schicht, umfassend eine erste Hauptoberfläche und eine zweite Hauptoberfläche, wobei die erste Hauptoberfläche der Schicht mit der zweiten Hauptoberfläche des ersten Substrats in Kontakt steht, wobei die Schicht eine UV-gehärtete Transferfolie umfasst, wobei die Transferfolie umfasst:
eine Matrix auf Siloxanbasis, die durch thermisches Härten von mindestens einem Siloxan, umfassend thermisch härtbare Gruppen, gebildet wird;
mindestens ein Silsesquioxan, umfassend UV-härtbare Gruppen, wobei das Silsesquioxan, umfassend UV-härtbare Gruppen, in der Matrix auf Siloxanbasis dispergiert ist; und
einen UV-Photoinitiator; wobei die Transferfolie ein Kleber ist und wobei die Schicht nicht klebrig und optisch transparent ist,
wobei das mindestens eine Siloxan, umfassend thermisch härtbare Gruppen, ein Siloxan mit Epoxid-funktionellen Gruppen umfasst, und
wobei das mindestens eine Silsesquioxan, umfassend UV-härtbare Gruppen, ein (Meth)acrylat-funktionelles Silsesquioxan umfasst,
wobei sich optisch transparent auf eine Lichtdurchlässigkeit von mindestens 85 % über mindestens einen Teil des sichtbaren Lichtspektrums von 400 bis 700 nm bezieht.

5. Der Gegenstand nach Anspruch 4, wobei die zweite Hauptoberfläche der Schicht eine strukturierte Oberfläche umfasst.

6. Der Gegenstand nach Anspruch 4, ferner umfassend ein zweites Substrat mit einer ersten Hauptoberfläche und einer zweiten Hauptoberfläche, wobei die erste Hauptoberfläche des zweiten Substrats mit der zweiten Hauptoberfläche der Schicht in Kontakt steht und klebend daran gebunden ist.

7. Ein Verfahren zum Herstellen eines Gegenstands, umfassend:
Herstellen einer Transferfolie mit einer ersten Hauptoberfläche und einer zweiten Hauptoberfläche, wobei die Transferfolie umfasst:
eine Matrix auf Siloxanbasis, die durch thermisches Härten von mindestens einem Siloxan, umfassend thermisch härtbare Gruppen, gebildet wird;
mindestens ein Silsesquioxan, umfassend UV-härtbare Gruppen, wobei das Silsesquioxan, umfassend UV-härtbare Gruppen, in der Matrix auf Siloxanbasis dispergiert ist; und
einen UV-Photoinitiator; wobei die Transferfolie ein Kleber ist und durch UV-Strahlung gehärtet werden kann, um eine nicht klebrige, gehärtete Schicht zu bilden, wobei die nicht klebrige, gehärtete Schicht optisch transparent ist,
wobei das mindestens eine Siloxan, umfassend thermisch härtbare Gruppen, ein Siloxan mit Epoxid-funktionellen Gruppen umfasst, und
wobei das mindestens eine Silsesquioxan, umfassend UV-härtbare Gruppen, ein (Meth)acrylat-funktionelles Silsesquioxan umfasst;
Bereitstellen eines ersten Substrats mit einer ersten Hauptoberfläche und einer zweiten Hauptoberfläche;
Kontaktieren der ersten Hauptoberfläche der Transferfolie mit der zweiten Hauptoberfläche des ersten Substrats; und
UV-Härten der Transferfolie;
wobei sich optisch transparent auf eine Lichtdurchlässigkeit von mindestens 85 % über mindestens einen Teil des sichtbaren Lichtspektrums von 400 bis 700 nm bezieht.

8. Das Verfahren nach Anspruch 7, wobei das Herstellen eines Transferbands umfasst:
Bereitstellen mindestens eines Siloxans mit thermisch härtbaren Gruppen, wobei das mindestens eine Siloxan mit thermisch härtbaren Gruppen ein Siloxan mit Epoxid-funktionellen Gruppen umfasst;
Bereitstellen eines thermisch aktivierten Säureinitiators;
Bereitstellen mindestens eines Silsesquioxans, umfassend UV-härtbare Gruppen, wobei das mindestens eine Silsesquioxan, umfassend UV-härtbare Gruppen, ein (Meth)acrylat-funktionelles Silsesquioxan umfasst;
Bereitstellens mindestens eines UV-Photoinitiators;
Dispergieren des thermisch aktivierten Säureinitiators, des mindestens einen UV-Photoinitiators und des mindestens einen Silsesquioxans, umfassend UV-härtbare Gruppen, in dem mindestens einen Siloxan mit thermisch härtbaren Gruppen, um eine härtbare Mischung zu bilden;
Beschichten der härtbaren Mischung auf ein Trennsubstrat; und
thermisches Härten des Siloxans mit thermisch härtbaren Gruppen, um eine Transferfolie bereitzustellen, die eine Klebeschicht ist.

## Revendications

1. Film de transfert comprenant :
une matrice à base de siloxane formée par durcissement thermique d'au moins un siloxane comprenant des groupes durcissables thermiquement ;
au moins un silsesquioxane comprenant des groupes durcissables aux UV ; et
un photo-initiateur UV ; dans lequel le silsesquioxane comprenant des groupes durcissables aux UV est dispersé dans la matrice à base de siloxane, dans lequel le film de transfert est un adhésif et peut être durci par rayonnement UV pour former une couche durcie non collante, dans lequel la couche durcie non collante est optiquement transparente,
dans lequel optiquement transparent se réfère à un facteur de transmittance d'au moins 85 % sur au moins une partie du spectre de la lumière visible de 400 à 700 nm,
dans lequel l'au moins un siloxane comprenant des groupes durcissables thermiquement comprend un siloxane avec des groupes fonctionnels époxy, et
dans lequel l'au moins un silsesquioxane comprenant des groupes durcissables aux UV comprend un silsesquioxane à fonction (méth)acrylate.

2. Film de transfert selon la revendication 1, dans lequel le film de transfert comprend une première surface principale et une seconde surface principale, dans lequel la première surface principale est disposée sur une protection détachable.

3. Film de transfert selon la revendication 1, dans lequel l'au moins un silsesquioxane comprenant des groupes durcissables aux UV comprend également des groupes durcissables thermiquement.

4. Article comprenant :
un premier substrat avec une première surface principale et une deuxième surface principale ;
une couche comprenant une première surface principale et une seconde surface principale, dans lequel la première surface principale de la couche est en contact avec la seconde surface principale du premier substrat, dans lequel la couche comprend un film de transfert durci aux UV, dans lequel le film de transfert comprend :
une matrice à base de siloxane formée par durcissement thermique d'au moins un siloxane comprenant des groupes durcissables thermiquement ;
au moins un silsesquioxane comprenant des groupes durcissables aux UV, dans lequel le silsesquioxane comprenant des groupes durcissables aux UV est dispersé dans la matrice à base de siloxane ; et
un photo-initiateur UV ; dans lequel le film de transfert est un adhésif, et dans lequel la couche est non collante et optiquement transparente,
dans lequel l'au moins un siloxane comprenant des groupes durcissables thermiquement comprend un siloxane avec des groupes fonctionnels époxy, et
dans lequel l'au moins un silsesquioxane comprenant des groupes durcissables aux UV comprend un silsesquioxane à fonction (méth)acrylate,
dans lequel optiquement transparent se réfère à un facteur de transmittance d'au moins 85 % sur au moins une partie du spectre de la lumière visible de 400 à 700 nm.

5. Article selon la revendication 4, dans lequel la seconde surface principale de la couche comprend une surface structurée.

6. Article selon la revendication 4, comprenant en outre un second substrat avec une première surface principale et une seconde surface principale, dans lequel la première surface principale du second substrat est en contact avec la seconde surface principale de la couche et liée à celle-ci de manière adhésive.

7. Procédé de préparation d'un article comprenant :
la préparation d'un film de transfert avec une première surface principale et une seconde surface principale, dans lequel le film de transfert comprend :
une matrice à base de siloxane formée par durcissement thermique d'au moins un siloxane comprenant des groupes durcissables thermiquement ;
au moins un silsesquioxane comprenant des groupes durcissables aux UV, dans lequel le silsesquioxane comprenant des groupes durcissables aux UV est dispersé dans la matrice à base de siloxane ; et
un photo-initiateur UV ; dans lequel le film de transfert est un adhésif et peut être durci par rayonnement UV pour former une couche durcie non collante, dans lequel la couche durcie non collante est optiquement transparente,
dans lequel l'au moins un siloxane comprenant des groupes durcissables thermiquement comprend un siloxane avec des groupes fonctionnels époxy, et
dans lequel l'au moins un silsesquioxane comprenant des groupes durcissables aux UV comprend un silsesquioxane à fonction (méth)acrylate ;
la fourniture d'un premier substrat avec une première surface principale et une seconde surface principale ;
la mise en contact de la première surface principale du film de transfert avec la seconde surface principale du premier substrat ; et
le durcissement aux UV du film de transfert ;
dans lequel optiquement transparent se réfère à un facteur de transmittance d'au moins 85 % sur au moins une partie du spectre de la lumière visible de 400 à 700 nm.

8. Procédé selon la revendication 7, dans lequel la préparation d'un ruban de transfert comprend :
la fourniture d'au moins un siloxane avec des groupes durcissables thermiquement, dans lequel l'au moins un siloxane avec des groupes durcissables thermiquement comprend un siloxane avec des groupes fonctionnels époxy ;
la fourniture d'un initiateur acide activé thermiquement ;
la fourniture d'au moins un silsesquioxane comprenant des groupes durcissables aux UV, dans lequel l'au moins un silsesquioxane comprenant des groupes durcissables aux UV comprend un silsesquioxane à fonction (méth)acrylate ;
la fourniture d'au moins un photo-initiateur UV ;
la dispersion de l'initiateur acide activé thermiquement, de l'au moins un photo-initiateur UV et de l'au moins un silsesquioxane comprenant des groupes durcissables aux UV dans l'au moins un siloxane avec des groupes durcissables thermiquement pour former un mélange durcissable ;
l'enduction du mélange durcissable sur un substrat de libération ; et
le durcissement thermique du siloxane avec des groupes durcissables thermiquement pour obtenir un film de transfert qui est une couche adhésive.
